# EUROPEAN PATENT SPECIFICATION

(11) **EP 0 433 401 B1**
(45) Date of publication and mention of the grant of the patent: **28.02.1996**
(21) Application number: 90901357.5
(22) Date of filing: 14.12.1989
(51) Int. Cl.: C08K 7/14, C08K 3/08

(54) **COPPER MARINE CLADDING COMPOSITION**
SCHIFFSBESCHICHTUNGSMASSE AUF KUPFERBASIS
COMPOSITION DE PLACAGE MARINE A BASE DE CUIVRE

(30) Priority: 19.12.1988 US 286259
(43) Date of publication of application: 26.06.1991
(73) Proprietor: WENTZELL RESEARCH, INC., Wilmington, DE 19802 (US)
(72) Inventor: WENTZELL, Joseph, M., Ruskin, FL 33570 (US)
(74) Representative: Gold, Tibor Z.
(86) International application number: US8905574
(87) International publication number: WO9006968

(56) References cited:
- US-A- 4 197 233
- US-A- 4 247 594
- US-A- 4 705 647
- NO FURTHER RELEVANT DOCUMENTS HAVE BEEN DISCLOSED.
- H. Lee, K. Neville,"Handbook of Epoxy Resins", 1982 Reissue, McGraw-Hill Book Company, New York, p. 14-15
- Ullmann's Encyclopedia of Industrial Chemistry, 5th edition, vol. A9, 1987, VCH Verlagsgesellschaft, Weinheim, p. 555

## Description

### Technical Field

The difficulties encountered in fouling surfaces that are submerged in sea water, and maintained them free of marine growth are well known. Numerous techniques have been devised or proposed to retard or prevent fouling of the surfaces exposed to marine environments. Many approaches suggested have involved the use of toxic materials, many of which are being banned because of environmental considerations. The problem to the boat owner is a substantial one because it is common practice to haul pleasure boats once a year to renew the bottom paint surface.

### Background Art

US-A-4 192 233 describes an anti-fouling coating containing copper flake, a bis-phenol A epoxy resin, a polyglycol di-epoxide and a curing agent, which may be an amine or a polyamide. The copper flake should be present in the coating in a sufficient quantity to make it conductive.

U.S. Patent 4410642 discloses the use of copper with resins for marine coating compositions. U.S. Patent 3801534 discloses bisphenol A epoxy resins and cures in anti-fouling coating compositions. U.S. Patent 4344875 discloses diglycidyl ether of bisphenol A epoxy resin with organotin compounds in anti-fouling coating compositions. None disclose, however, the detailed copper compositions of this invention which provide surprisingly superior results.

### Disclosure of Invention

In accordance with this invention there is provided a specific cladding composition as defined in the accompanying claims comprising in combination:
a. Copper powder
b. Two epoxy resins:
   1. Bisphenol A epoxy resin
      and
   2. Polyglycol di-Epoxide
c. Glass fibers
d. Polydimethyl siloxane
e. Amine curing agents:
   1. A polyamido amine
      and
   2. An aliphatic amine

The compositions of this invention in addition to being free of environmental problems have other marked advantages. Once applied as directed they last for years. The formulation results in a hard, non-ablative surface which gives long life to the finish unlike anti-fouling paints which are designed to ablate to renew the finish and must therefore be reapplied frequently.

It is known that barnacles do not grow on copper. However, cladding with copper has had distinct disadvantages because it is a highly noble, conductive element and therefore subjects other metals used in the construction of marine structures to galvanic corrosion. This invention overcomes that problem.

### Best Mode for Carrying Out the Invention

The copper is utilized in a fine powder of a mesh size of about 100 to 325 (mesh opening 0.152 to 0.044 mm). It is employed in an amount of about 51.5 to 80% parts by weight of the total composition.

A bisphenol A epoxy resin composition is of the type, known in the art, formed by the reaction of epichlorohydrin with a polyol, such as 4,4'-isopropylidenediphenol (bis-phenol A). Preferably the epoxy resins are normally liquid compounds or low molecular weight solid compositions that are soluble in oxygenated aliphatic solvents such as ketones, esters, and ether alcohols or aromatic solvents such as xylene. The epoxy resin compositions desirably have molecular weights varying from about 340 to less than 8,000, preferably between about 340 and 3,000. This resin is employed in an amount of about 9 to 15%.

The polyglycol di-epoxide is well known in the art. The resin is employed in an amount of about 4-8%.

The glass fibers employed preferably have maximum lengths of 1/16 inch (1.5 mm) and maximum diameters of 30 microns. These fibers are used in an amount of from 0 to 10%.

Polydimethyl siloxane is employed in an amount of 0.4 to 1.5%.

The polyamido amine agent is preferably employed in an amount of from 4 to 11%. The aliphatic amine curing agent is preferably employed in an amount of from 0 to 3%. These well known amines contain two or more reactive hydrogen groups and amine terminated polyamide compositions, such as those formed through the condensation of unsaturated fatty acids with C₂-C₁₀ aliphatic polyamines having at least three amino groups per molecule. Representative examples of useful amine-type curing agents include triethylene tetramine, m-phenylenediamine, 3-diethylamino-1-propylamine, condensates of unsaturated fatty acids with diethylene triamine or triethylene tetramine (sold as Versamid Trade Mark 100, 115 and 125 resins), 3-isopropylamino propylamine, 1,3-diamino propane, 1,2-diamino propane, ethylene diamine, m-xylylene diamine, 3,3'-iminobispropylamine, tetraethylene pentamine.

The amine selection is based on the speed of setting desired. The second provides a faster cure, sometimes desirable on vertical surfaces in hot environments.

Inert diluents such as talc can be added as desired to provide greater viscosity when desired.

The ingredients excluding the curing agents are thoroughly admixed at a temperature of above 70° F (21°C) employing a stirrer or agitator. The curing agent is then thoroughly admixed at the site.

The compositions with the curing agent is then painted on by a brush or roller leaving a film approximately .015 inches (0.38 mm) thick. They can also be applied with a trowel or smoothed therewith after using the brush or roller. They can also be sprayed on using high pressure equipment. After application, a light sanding or abrasion of the surface of the clad is performed to expose the copper to the environment. A clad having compositions of this invention, has a minimum electrical resistivity of 1X10⁶ ohms cm. as tested on the abraded surface. The resistance is very important in the prevention of galvanic corrosion of less noble metals used in the fabrication of the clad structure.

All percentages as used herein are by weight based on the total composition, unless stated to the contrary, free of diluents or carrier.

This invention will be better understood by reference to the following examples:

### Example 1

A mixture of
1 part by weight of Ciba Geigy Araldite Trade Mark GY 6005 (b1)
0.5 part by weight of Ciba Geigy Araldite Trade Mark GY 508 (b2)
0.85 part by weight of Ciba Geigy Araldite Trade Mark HY 283 (e1)
5.35 part by weight of SCM Copper Powder 200 RL
0.58 part by weight of milled fiberglass 0.8 mm length
0.055 part by weight of Dow-Corning Polydimenthyl Siloxane 200 50 cs.
was applied to a section of inlet pipe in a utility plant. The pipe adjacent to the clad section collected in excess of three inches (7.6 cm) of barnacles in three months; no growth was observed on the clad section. A panel was coated with the clad and allowed to cure for seven days in an ambient temperature varying from about 68°-85° F (20-29°C) The resistivity of the clad was then measured and found to be greater than 1X10⁶ ohm cm.

### Example 2

Other panels and vessels are coated with the compositions of this invention and provide similar dramatic improvement.

Instead of glass fibers, fibers of other materials having similar properties can be employed.

## Claims

1. A marine cladding composition comprising in combination:
| | Weight % |
|---|---|
| a. Copper powder | 51.5 - 80 |
| b. Two epoxy resins | |
| 1. Bisphenol A epoxy resin | 9 - 15 |
| and | |
| 2. Polyglycol di-epoxide | 4 - 8 |
| c. Glass fibers | 0 - 10 |
| d. Polydimethyl siloxane | 0.4 - 1.5 |
| e. Two amine curing agents | |
| 1. A polyamido amine | 4 - 11 |
| and | |
| 2. An amine | 0 - 3 |
said composition having, after application, a minimum specific resistance of 1X10⁶ ohm cm.

2. The composition of claim 1 having the composition:
| | Parts by Weight |
|---|---|
| Copper powder | 5.35 |
| Bisphenol A epoxy resin | 1 |
| Polyglycol di-epoxide | 0.5 |
| Glass fibers | 0.58 |
| Polydimethyl siloxane | 0.055 |
| A Polyamido Amine | 0.85 |

## Patentansprüche

1. Dem Meer auszusetzende Belagmasse, umfassend in Kombination:
| | Gewichtsprozent |
|---|---|
| a. Kupferpulver | 51,5 - 80 |
| b. Zwei Epoxyharze | |
| 1. Bisphenol-A-Epoxyharz | 9 - 15 |
| und | |
| 2. Polyglykol-Diepoxyd | 4 - 8 |
| c. Glasfasern | 0 - 10 |
| d. Polydimethylsiloxan | 0,4 - 1,5 |
| e. Zwei als Härter dienende Amine | |
| 1. Ein Polyamidoamin | 4 - 11 |
| und | |
| 2. Ein Amin | 0 - 3, |
wobei diese Masse nach dem Aufbringen einen spezifischen Mindestwiderstand von 1 x 10⁶ Ω cm hat.

2. Masse nach Anspruch 1 der folgenden Zusammensetzung:
| | Gewichtsteile |
|---|---|
| Kupferpulver | 5,35 |
| Bisphenol-A-Epoxyharz | 1 |
| Polyglykoldiepoxid | 0,5 |
| Glasfasern | 0,58 |
| Polydimethylsiloxan | 0,055 |
| Ein Polyamidoamin | 0,85 |

## Revendications

1. Composition de placage marin comprenant en association les produits suivants :
| | % en masse |
|---|---|
| a. Cuivre en poudre | 51,5-80 |
| b. Deux résines époxy | |
| 1. Résine époxy de bisphénol A | 9-15 |
| et | |
| 2. diépoxyde de polyglycol | 4-8 |
| c. Fibres de verre | 0-10 |
| d. Polydiméthylsiloxane | 0,4-1,5 |
| e. Deux agents de durcissement de type amine | |
| 1. Polyamidoamine | 4-11 |
| et | |
| 2. Amine | 0-3 |
ladite composition ayant, après application, une résistivité spécifique minimale de 1x10⁶ ohm.cm.

2. Composition selon la revendication 1 ayant la composition suivante :
| | Parties en masse |
|---|---|
| Cuivre en poudre | 5,35 |
| Résine époxy de bisphénol A | 1 |
| Diépoxyde de polyglycol | 0,5 |
| Fibres de verre | 0,58 |
| Polydiméthylsiloxane | 0,055 |
| Polyamidoamine | 0,85 |
